# FASCICULE DE BREVET EUROPEEN

(11) **EP 1 662 884 B1**
(45) Date de publication et mention de la délivrance du brevet: **06.01.2010**
(21) Numéro de dépôt: 04787347.6
(22) Date de dépôt: 10.09.2004
(51) Int. Cl.: A21D 2/18

(54) **PÂTE LEVÉE TOLÉRANTE À LA SURGÉLATION ET PROCÉDÉ DE FABRICATION**
GELOCKERTER, GEFRIERFÄHIGER TEIG SOWIE VERFAHREN ZU SEINER HERSTELLUNG
LEAVENED DOUGH THAT WITHSTANDS DEEP FREEZING, AND METHOD FOR THE PRODUCTION THEREOF

(30) Priorité: 18.09.2003 FR 0310947
(43) Date de publication de la demande: 07.06.2006
(73) Titulaire: Castel, Emmanuel, 82000 Montauban (FR)
(72) Inventeur: Castel, Emmanuel, 82000 Montauban (FR)
(74) Mandataire: Morelle, Guy Georges Alain
(86) Numéro de dépôt international: PCT/FR2004/002298
(87) Numéro de publication internationale: WO 2005/025318

(56) Documents cités:
- EP-A- 0 145 367
- WO-A-96/09769
- FR-A- 2 538 676

## Description

La présente invention se rapporte à la préparation d'une pâte levée destinée à la fabrication d'un produit de pâtisserie de type brioche.

La présente invention a pour objet une composition de pâte levée tolérante au froid destinée à la préparation de pâtons prêts à l'emploi pouvant être conservés à l'état surgelé, un procédé de préparation d'une telle pâte, ainsi que les produits des pâtisserie de type brioche obtenus.

On connaît la fabrication de brioches à partir d'une pâte malaxée dans un pétrin, cette pâte étant ensuite mise en forme en vue de la pousse et de la cuisson. Les brioches fraîches ainsi fabriquées sont ensuite vendues sur place ou à proximité du lieu de fabrication.

Un inconvénient de ce type de production est dû au fait qu'il faut prévoir précisément les quantités de production, car les brioches doivent être vendues rapidement en raison des problèmes de conservation, les consommateurs préférant des brioches moelleuses. Par ailleurs, la forte saisonnalité de certains des produits de ce type, en particulier des brioches dites "galettes des rois" dont la demande est très importante durant le mois de janvier, constitue une forte contrainte sur les professionnels, qui souhaiteraient pouvoir mieux répartir leurs rythmes de production dans le temps. Il faut donc pouvoir adapter la production, en améliorant la souplesse du système.

De plus, les conditions de fabrication et de distribution ont changé. De plus en plus souvent, des industriels livrent des produits semi-finis aux détaillants, qui les mettent en vente après une cuisson finale sur place afin d'offrir au consommateur un produit d'une grande fraîcheur. Les détaillants ne disposent pas d'une chaîne complète de fabrication, ni du personnel qualifié pour procéder à l'élaboration des pâtes, qui est la partie la plus délicate de la fabrication, mais seulement d'un four de cuisson. La livraison de produits semi-finis de ce type doit donc être faite dans des conditions et dans des délais qui permettent d'assurer une bonne conservation des produits.

La surgélation est une solution au problème car elle permet de fabriquer des produits à base de pâte levée, prêts pour la pousse et la cuisson. Il suffit de préparer des pâtons, et de les stocker à l'état surgelé. Au fur et à mesure des besoins, les pâtons surgelés sont placés dans une chambre de pousse, puis dans un four de cuisson, le temps nécessaire à ces opérations avant la mise en vente étant très court. La difficulté dans la réalisation de ces opérations de pousse et de cuisson est réduite par le fait qu'il suffit de programmer les chambres de pousse et les fours selon les indications du fabricant des produits surgelés.

La surgélation, en provoquant l'arrêt de l'évolution de la pâte, principalement l'arrêt de la fermentation, permet ainsi de conserver la pâte sur de longues périodes de temps. Cependant divers inconvénients subsistent justement du fait de la surgélation et de la cuisson différée des pâtons. Les produits obtenus après surgélation comparés aux produits cuits directement, sont généralement d'un volume inférieur, d'un aspect extérieur moins attractif, notamment par une couleur moins riche, mais surtout, le goût et la consistance moelleuse particulièrement recherchés dans les pâtisseries briochées, sont altérés.

La fermentation est un processus biologique qui se déclenche dès l'introduction de la levure à un mélange de farine et d'eau, sous réserve que la température soit suffisante, ce qui est généralement le cas dans le laboratoire d'un boulanger-pâtissier. Elle se poursuit durant le pétrissage et la pousse. La durée de chacune de ces opérations est fixée en fonction des ingrédients composant la pâte, les recettes pour les différents types de produits à base de pâte levée étant bien connues des hommes de l'art. La surgélation vient donc perturber le déroulement du processus de fermentation, ce qui conduit aux inconvénients cités.

La présente invention a pour premier but de proposer un procédé de fabrication et de mise en forme de pâtons pouvant être surgelés, dont la cuisson conduit à des produits de forme et d'aspect satisfaisants, et dont les qualités gustatives et la consistance sont conservées ou même améliorées par rapport à des produits du même type obtenus par les techniques traditionnelles, sans qu'il soit nécessaire d'avoir recours à des adjuvants de fabrication.

Un autre but est de proposer une recette de pâte levée de type pâte à brioche tolérante à la surgélation, pouvant être réalisée grâce au procédé de fabrication revendiqué et permettant de préparer des produits dont les caractéristiques visuelles et gustatives sont conservées ou même améliorées par rapport aux produits préparés avec les recettes traditionnelles. La recette selon l'invention a en particulier l'avantage de permettre la préparation de pâtons qui peuvent au choix, être surgelés pour une cuisson différée lorsque le besoin apparaîtra, ou placés immédiatement en chambre de pousse et cuits, sans que les caractéristiques des produits obtenus en soient affectées. A noter que les produits obtenus ne contiennent aucun additifs artificiels.

WO-A-9 609 769 divulgue une pâte à brioche surgelée comprenant une protéine du type gélatine et un amidon modifié.

Selon la présente invention, le procédé de préparation d'une pâte levée de type pâte à brioche, notamment en vue de la fabrication de pâtons surgelés prêts pour la cuisson, consistant à mélanger de la farine, des matières grasses, des oeufs, du lait, au moins un agent aromatisant, au moins une substance sucrante, de la levure, et du sel, se **caractérise en ce qu**'il comprend les étapes suivantes :
- introduction dans un pétrin d'une première fraction de substance sucrante, avec la farine, la levure, les oeufs, le lait, au moins un agent aromatisant et le sel,
- frasage puis premier pétrissage,
- introduction de la fraction restante de substance sucrante et deuxième pétrissage,
- introduction des matières grasses et troisième pétrissage,
- pointage.

Le pétrin est un pétrin à cuve et bras tournants, habituellement utilisé pour la préparation des pâtes briochées, dont l'homme du métier connaît le maniement. Dans un première temps, on y introduit tous les ingrédients nécessaires à la préparation de la pâte, hormis la fraction de substance sucrante restante et les matières grasses.

Selon une caractéristique de l'invention, la quantité totale de substance sucrante, c'est-à-dire la somme de la première fraction et de la fraction restante, est notablement plus importante que la quantité normalement utilisée dans les pâtes levées, de telles quantité conduisant généralement à des produits mal développés. Cette quantité élevé de substance sucrante est associée à une quantité de levure également supérieure aux doses habituelles. On introduit ainsi dans le pétrin de 26% à 60%, de substance sucrante totale et 7% à 40% de levure, de préférence de 7% à 15%, en poids rapporté au poids de farine.

Par ailleurs, la substance sucrante doit, selon le procédé, être introduite en deux fois dans la recette. La première fraction, introduite dès le frasage, tandis que la deuxième fraction ou fraction restante est introduite après un premier pétrissage de la pâte. La première fraction peut constituer environ la moitié des sucres totaux, la proportion des deux fractions de substance sucrante pouvant cependant varier sensiblement. De manière avantageuse, on introduit dans le pétrin la première fraction de substance sucrante à hauteur de 10% à 30%, de préférence 15% à 20% et encore de préférence 18% en poids rapporté au poids de farine; et on y adjoint 8% à 12% de levure, de préférence 9%, en poids rapporté au poids de farine.

La substance sucrante peut être apportée sous différentes formes. On peut utiliser par exemple du saccharose ou du sucre inverti, du miel ou toute autre substance utilisée en pâtisserie, ou un mélange de telles substances. Les deux fractions sucrées peuvent être différentes également. Selon un mode de réalisation particulièrement apprécié, la première fraction de substance sucrante est apportée sous forme de miel. Le miel utilisé peut être n'importe quel miel produit selon les normes de qualité et de pureté en vigueur. Il est de préférence pâteux ou liquide à température ambiante, sans que cette propriété soit critique.

La fraction sucrée restante sera apportée au moment voulu sous une forme usuelle, par exemple sous forme de sucre inverti ou de saccharose. Les autres ingrédients sont apportés dans des proportions connues de l'homme de l'art. Les teneurs sont données en poids rapporté au poids de farine.

Selon un mode particulier de mise en oeuvre du procédé selon l'invention, on prépare un appareil comprenant la première fraction de substance sucrante, le lait et au moins un agent aromatisant, qu'on maintient en chambre froide plusieurs heures, par exemple une nuit et jusqu'à deux jours. Ainsi, la première fraction de substance sucrante, le lait et au moins un agent aromatisant sont introduits dans le pétrin sous la forme d'un appareil préalablement fondu et maintenu au froid pendant au moins 20 heures.

Le frasage, c'est-à-dire le mélange initial des ingrédients est de préférence réalisé à vitesse lente. Par vitesse lente, on entend une vitesse plus lente que la vitesse normale de frasage, par exemple en 2ème vitesse sur un pétrin à axe oblique.

Selon une caractéristique importante du procédé, le premier pétrissage est plus long qu'un pétrissage traditionnel pour une pâte briochée, qui est généralement de 10 minutes. En effet, la pâte se trouve avoir une consistance très ferme qui augmente jusqu'à la dixième minute, pour parvenir ensuite à l'étirement du gluten à la limite de la rupture et donc au corsage de la pâte nécessaire à une bonne tenue. De préférence on prolonge le premier pétrissage jusqu'à 20 minutes.

On introduit ensuite le sucre restant et on poursuit le pétrissage de manière connue. Par exemple, on réalise un second pétrissage pendant 10 minutes, on incorpore la matière grasse et on poursuit par un troisième pétrissage durant 4 minutes. Lorsque la matière grasse choisie est le beurre ou un corps gras solide à température ambiante du fournil, on recommande de l'introduire sous forme de pommade.

Enfin, la pâte est soumise à une étape de pointage durant 3 à 4 heures. De manière avantageuse, le pointage est réalisé à une température supérieure à la température habituelle de pointage, de préférence à une température comprise entre 28°C et 35°C.

Finalement, la pâte est rompue et mise au froid. Par exemple on peut rompre la pâte 2 mn et la mettre au froid à une température allant de 0°C à 5°C durant 16 à 22 heures. Selon une variante du procédé selon l'invention, après la mise au froid, la pâte est détaillée et façonnée en pâtons. Les pâtons peuvent alors soit être cuits immédiatement, soit être surgelés avant une cuisson réalisée ultérieurement, selon les besoins en produit fini.

Selon une autre variante de la présente invention, la pâte est surgelée en masse, en bac de quelques kilogrammes. Dans ce cas, le détaillage-façonnage en pâtons sera réalisé après décongélation.

La présente invention a également pour objet une pâte levée pour la préparation de pâtons, destinés à la fabrication d'un produit de pâtisserie de type brioche, comprenant de la farine, des oeufs, des matières grasses, du lait, au moins une substance sucrante, au moins un agent aromatisant et du sel, et ladite pâte comprenant de 26% à 60% de substance sucrante, et 7% à 40% de levure, de préférence de 7% à 15%, en poids rapporté au poids de farine.

Une telle pâte peut bien entendu être réalisée grâce au procédé décrit précédemment, qui est même tout particulièrement adapté à cette préparation. En effet, après de nombreux essais, le demandeur a remarqué une double dépendance, d'une part entre la quantité de substance sucrante et la quantité de levure présentes dans la pâte, et d'autre part entre le mode d'incorporation de la substance sucrante et la qualité de la pousse après congélation. De ce fait, la combinaison de la composition selon l'invention et du procédé décrit précédemment donnera un résultat optimal, à savoir un produit brioché ayant des caractéristiques visuelles et gustatives rivalisant avec celles des produits réalisés selon les méthodes et les recettes classiques. En outre, la pâte ainsi fabriquée possède une tolérance exceptionnelle à la surgélation, qui lui permet de conserver ses excellentes caractéristiques après conservation sous forme surgelée durant plusieurs semaines, voire plusieurs mois.

Sans chercher une théorie avérée expliquant le résultat obtenu, on suppose que la grande quantité de sucres dont une fraction importante est introduite dès le frasage tempère l'activité des levures. De ce fait, malgré l'introduction d'une quantité élevée de levure, on n'assiste pas à un démarrage accéléré de la fermentation durant le pétrissage, tout en disposant après surgélation d'une population de levure suffisante pour reprendre la fermentation. Par ailleurs, la reprise tempérée et progressive de la fermentation pourrait être aussi liée à un pétrissage plus long favorisant l'oxygénation de la pâte (et freinant la fermentation).

De manière avantageuse, la recette de la pâte levée selon l'invention contient en tant que substance sucrante du miel, à raison de 10% à 30% en poids rapporté au poids de farine. De préférence, la pâte contient 15% à 20% de miel et 8% à 12% de levure. Selon un mode de réalisation encore préféré on utilise 18% de miel et 9% de levure. Les teneurs sont données en poids rapporté au poids de farine.

On utilise de préférence de la levure de boulangerie fraîche. Les quantités mises en oeuvre sont calculées sur cette base. Il est cependant possible d'utiliser des levures sèches actives ou des levures déshydratées, à condition de respecter les modalités de réactivation prévues par le producteur. On pourra aussi avoir recours à des levures congelées en paillettes telles que celles distribuées par la société Lesaffre (Marcq en Bareul, France). Dans ce cas la dose sera réduite à un tiers de la dose de levure fraîche équivalente.

Ainsi, la composition d'une pâte levée selon l'invention comprend avantageusement les ingrédients suivants :
- farine 1100 g
- oeufs 5 unités
- beurre 200 g
- lait 100 g
- arômes liquides 200 g
- sucre 200 g
- miel 200 g
- levure 100 g
- sel 21 g

La pâte levée préparée selon la recette décrite ci-dessus peut être détaillée et façonnée pour préparer des pâtons prêts pour la cuisson, lesdits pâtons pouvant être surgelés pour conservation jùsqu'à leur cuisson ou cuits sur le champ. La pâte peut également être surgelée en masse, par exemple dans des bac de quelques kilogrammes. Elle sera alors façonnée après retour à la température ambiante. Est objet de la présente invention, la pâte surgelée en masse ou en pâtons prêts pour la cuisson, destinée à la préparation ultérieure d'un produit de pâtisserie de type brioche, obtenue à partir de la pâte levée décrite ci-dessus.

Est également objet de la présente invention, la pâte surgelée en masse ou en pâtons prêts pour la cuisson, destinée à la préparation d'un produit de pâtisserie de type brioche, obtenue par le procédé de fabrication précédemment décrit.

Dans la présente demande, on entend par surgélation toute opération qui consiste à conserver un produit à une température inférieure à 0°C, dans le respect des normes relatives à la conservation des produits alimentaires concernés. En général, selon ces normes, les produits sont d'abord soumis à une température inférieure à -20°C pendant au moins quelques heures (c'est la surgélation à proprement parler), puis sont placés pour conservation à une température inférieure à -15°C (c'est la congélation).

Lorsque l'on souhaite préparer un produit de pâtisserie de type brioche à partir de pâtons surgelés selon l'invention, on peut utiliser le procédé suivant, également revendiqué: placer un pâton surgelé selon l'invention à une température de 30°C à 40°C durant 2 à 4 heures, puis à réaliser la cuisson dudit pâton dans un four à la température habituelle.

Enfin sont revendiqués les produits de pâtisserie de type brioche obtenus à partir d'une pâte surgelée en masse ou en pâtons selon l'invention, ces produits présentant des caractéristiques visuelles et gustatives identiques à celles d'un produit obtenu sans phase de surgélation.

Par des essais appropriés, il a été démontré que les produits briochés obtenus selon l'invention ont des caractéristiques plus que satisfaisantes. Leur aspect, leur consistance, leur goût sont comparables sinon meilleurs que ceux des produits traditionnels, et notamment leur moelleux et leur volume ne sont pas affectés par le mode de préparation. Il ont en outre une bonne capacité de conservation après cuisson.

Les exemples suivants sont destinés à illustrer la présente invention.

### EXEMPLE 1

Composition d'une pâte levée pour la préparation d'une brioche de type galette des rois
- farine 1100 g
- oeufs 5 unités
- beurre 200 g
- lait 100 g
- sucre 200 g
- sel 21 g
- miel 200 g
- levure 100 g
- rhum 50 g
- Grand Marnier 25 g
- eau de fleur d'oranger 150 g
- arôme citron 12 g
- arôme orange 12 g

### EXEMPLE 2

Procédé de fabrication d'une pâte levée un vue de la préparation d'une brioche de type galettes des rois

Les ingrédients mis en oeuvre sont ceux de l'exemple 1, pris dans les mêmes quantités. On introduit d'abord dans un pétrin à axe oblique tous les ingrédients nécessaires à la préparation de la pâte, hormis le sucre et le beurre. Le frasage est réalisé à vitesse lente (2ème vitesse) durant 3 mn. Puis, le premier pétrissage est effectué pendant 20 minutes, en 2ème vitesse. On introduit ensuite le sucre et on poursuit le pétrissage pendant 10 minutes. On incorpore le beurre en pommade et on poursuit par un troisième pétrissage durant 4 minutes en 2ème vitesse. Le pointage est réalisé durant 4 heures à une température de 28°C à 35°C. Finalement, la pâte est rompue 2 mn et mise au froid à une température de 3°C à 5°C durant 4 heures. Après quoi, la pâte est détaillée et façonnée en couronnes de diverses dimensions.

### EXEMPLE 3

### Préparation d'une brioche de type galettes des rois à partir de pâtons surgelés

Une pâte briochée est préparée dans les conditions décrites dans l'exemple 2. Après façonnage des couronnes, celles-ci sont placées dans une chambre de surgélation à - 22°C, puis transférées dans un congélateur pour conservation le temps voulu à -16°C.

Lorsqu'on décide de cuire les galettes, les couronnes de pâte surgelées sont placées sur une plaque à une température de 30°C à 40°C. La décongélation a alors lieu avec reprise progressive de la fermentation. La pousse va se poursuivre durant 2 à 4 heures, la durée nécessaire étant appréciée visuellement par le professionnel. Puis la cuisson des couronnes est effectuée dans un four ventilé, à une température de 140°C pendant 10 mn, puis à 120°C pendant 10 mn.

### EXEMPLE 4

### Essais comparatifs

### 1) - Préparation des échantillons

Trois recettes ont été préparées, dont les compositions sont identiques à celle de l'Exemple 1, hormis pour la levure, le miel et le sucre, dont les quantités sont portées au tableau 1.

**TABLEAU 1**

| | **Recette N°1** | **Recette N°2** | **Recette N°3** |
|---|---|---|---|
| levure | 20 g | 90 g | 90 g |
| miel (1ère fraction) | 0 | 0 | 200 g |
| sucre (2ème fraction) | 200 g | 200 g | 200 g |

La recette N°1 correspond à une pâte classique. Dans la recette N°2, seule la quantité de levure a été augmentée. La recette N°3 est composée selon l'invention. Les trois pâtes sont préparées comme décrit à l'exemple 2, puis pour chacune d'elles, on forme des pâtons de 460 g de pâte crue en forme de couronnes, que l'on surgèle. Le jour de surgélation est Jo.

Après différentes durées de surgélation, on prélève un pâton de chaque recette, et on les place à la température du fournil pour reprise de la fermentation, comme décrit à l'exemple 3, puis une la température de pousse de 40°C. Pour les besoins du test, on laisse la pâte se développer durant 3h30 avant de procéder à la cuisson, sauf dans les cas suivants:
- pâte N°2 après un jour de surgélation: 1h 50 mn, car la pousse très active.
- pâte N°1 : les mauvais résultats après 21 jours de surgélation ont conduit à arrêter les tests sur cette recette.

La cuisson est réalisée comme décrit à l'exemple 3.

### 2) - Évaluation du développement de la pâte durant la pousse

Le développement de la pâte est évalué pour chaque couronne, par la mesure de la circonférence (notée C) et de la hauteur (notée H). Les résultats sont portés dans le tableau 2.

**TABLEAU 2**

| durée de surgélation | Recette N°1 | | Recette N° 2 | | Recette N° 3 | |
|---|---|---|---|---|---|---|
| | C (cm) | H (cm) | C (cm) | H (cm) | C (cm) | H (cm) |
| 1 j | 24,5 | 6,0 | 24,5 | 6,5 | 24,5 | 6,0 |
| 21 j | 19,0 | 4,5 | 23,5 | 5,5 | 24,3 | 6,2 |
| 28 j | - | | 21,0 | 5,5 | 23,5 | 6,4 |
| 35 j | - | | 20,0 | 5,0 | 23,5 | 6,0 |
| 42 j | - | | 20,2 | 5,0 | 22,9 | 6,2 |

On constate qu'après un seul jour de surgélation, les trois recettes permettent une bonne pousse de la pâte. La composition selon l'invention présente donc des caractéristiques de pousse comparables aux compositions classiques lors d'une conservation courte.

La recette N°1 perd sa capacité de reprise de fermentation avant le 21ème jour de surgélation. A l'oeil nu l'homme du métier peut se rendre compte des défauts d'une telle pâte qui ne mériterait pas d'être cuite pour la vente. La recette N°2 voit sa capacité de fermentation diminuer avec la durée de surgélation: la circonférence passe de 24,5 cm après un jour de surgélation à 20,2 cm après 42 jours de surgélation, la hauteur variant de 6,5 cm à 5,0 cm dans le même temps, soit une perte de circonférence de 17% et de 23% de hauteur environ. La recette N°3 est beaucoup plus stable avec 6% et 3% de diminution respectivement, ce qui est considéré comme négligeable.

### 3) - Tests gustatifs

Des tests de dégustation en aveugle ont été conduits sur les galettes après chaque cuisson, par un jury de 7 personnes. La dégustation a lieu dans un délai de 6 heures après refroidissement. Les paramètres évalués portent sur la croûte et l'aspect extérieur, la consistance de la mie et le goût. Une appréciation générale est donnée. Les résultats sont portés dans le tableau 3.

**TABLEAU 3**

| | | Croûte | Mie | Goût | Appréciation |
|---|---|---|---|---|---|
| J = 1 | N°1 | fine, régulière | souple, onctueuse | goûteux, sucré | agréable, fin très bon produit |
| | | | | | |
| | N°2 | épaisseur irrégulière | souple, onctueuse | goûteux, sucré | quelques défauts bon produit |
| | | | | | |
| | N°3 | fine , régulière | souple, onctueuse | goûteux, sucré | uniforme, fin très bon produit |
| J = 21 | N°1 | très irrégulière | très compacte | fade | produit médiocre, non commercialisable |
| | | | | | |
| | N°2 | épaisse, irrégulière | tassée | goûteux, sucré | manque de légèreté bon produit |
| | | | | | |
| | N°3 | fine , régulière | souple, onctueuse | goûteux, sucré | goût parfait, doré très bon produit |
| J = 28 | N°2 | épaisse | tassée, compacte | goûteux, sucré | manque de souplesse produit moyen |
| | | | | | |
| | N°3 | fine, régulière | souple, onctueuse | goûteux, sucré | uniforme, fin très bon produit |
| J=35 | N°2 | épaisse | tassée, compacte | peu goûteux, peu sucré | peu attractif produit juste moyen |
| | | | | | |
| | N°3 | fine , régulière | souple, onctueuse | goûteux, sucré | léger, moelleux très bon produit |
| J = 42 | N°2 | épaisse, irrégulière | tassée, mal cuite | peu goûteux, peu sucré | déformé, lourd produit médiocre |
| | | | | | |
| | N°3 | fine , régulière | souple, onctueuse | goûteux, sucré | léger, fin très bon produit |

Seule la recette N°3 permet d'obtenir un produit d'une qualité excellente et stable, quelle que soit la durée de conservation de la pâte surgelée.

### 4) - Test de rassissement

Un test de rassissement a été réalisé sur les galettes préparées avec la pâte dégelée à J = 28.

Après la dégustation des galettes cuites quelques heures auparavant comme indiqué ci-dessus, on place les brioches dans une chambre froide jusqu'au lendemain. Les brioches sont ensuite retirées de la chambre froide et laissées 3 heures à la température ambiante, puis le test de dégustation est réalisé dans les mêmes conditions que la veille.

L'appréciation du jury indique que le produit N° 2 dont le moelleux n'est pas parfait (c'était déjà le cas lors de la première dégustation), présente une outre une texture de mie friable et perdant son goût. Le produit N° 3 au contraire garde un moelleux et une souplesse satisfaisante. La mie ne s'effrite pas, sa texture est la même que la veille. Le produit N°3, préparé à partir d'une pâte selon l'invention surgelée durant 28 jours, possède donc une excellente capacité de conservation après cuisson.

## Revendications

1. Procédé de préparation d'une pâte levée de type pâte à brioche, notamment en vue de la fabrication de pâtons surgelés prêts pour la cuisson, consistant à mélanger de la farine, des matières grasses, des oeufs, du lait, au moins un agent aromatisant, au moins une substance sucrante, de la levure et du sel, ***caractérisé en ce qu*'**il comprend les étapes suivantes :
- introduction dans un pétrin, d'une première fraction de substance sucrante, avec la farine, la levure, les oeufs, le lait, au moins un agent aromatisant et le sel,
- frasage puis premier pétrissage,
- introduction de la fraction restante de substance sucrante et deuxième pétrissage,
- introduction des matières grasses et troisième pétrissage,
- pointage.

2. Procédé selon la revendication 1, ***caractérisé en ce qu*'**on introduit dans le pétrin jusqu'à 80% de substance sucrante totale, de préférence de 26% à 60%, et 7% à 40% de levure, de préférence de 7% à 15%, en poids rapporté au poids de farine.

3. Procédé selon la revendication 1, ***caractérisé en ce qu*'**on introduit dans le pétrin ladite première fraction de substance sucrante à hauteur de 10% à 30%, de préférence 15% à 20% et encore de préférence 18% en poids rapporté au poids de farine; et 8% à 12% de levure, de préférence 9%, en poids rapporté au poids de farine.

4. Procédé selon l'une des revendications 1 à 3, ***caractérisé en ce que*** ladite première fraction de substance sucrante est apportée sous forme de miel.

5. Procédé selon l'une des revendications 1 à 4, ***caractérisé en ce que*** ladite première fraction de substance sucrante, le lait et au moins un agent aromatisant sont introduits dans le pétrin sous la forme d'un appareil préalablement fondu et maintenu au froid pendant au moins 20 heures.

6. Procédé selon l'une quelconque des revendications précédentes, ***caractérisé en ce que*** le frasage est réalisé à vitesse lente.

7. Procédé selon l'une des revendications précédentes, ***caractérisé en ce que*** le premier pétrissage est prolongé par rapport à un pétrissage traditionnel, de préférence jusqu'à 20 minutes.

8. Procédé selon l'une des revendication précédentes, ***caractérisé en ce que*** le pointage est réalisé à une température de 28°C à 35°C, durant 3 à 4 heures.

9. Procédé selon l'une des revendication précédentes, ***caractérisé en ce que*** après l'étape de pointage, la pâte est rompue et mise au froid, puis détaillée et façonnée en pâtons avant cuisson.

10. Procédé selon la revendication 9, ***caractérisé en ce que*** la pâte est surgelée avant ou après détaillage-façonnage en pâtons.

11. Pâte levée de type pâte à brioche tolérante à la surgélation pour la préparation de pâtons, notamment de pâtons surgelés, comprenant de la farine, des oeufs, des matières grasses, du lait, au moins une substance sucrante, au moins un agent aromatisant et du sel, ***caractérisée en ce que*** ladite pâte comprend 26% à 60% de substance sucrante, et 7% à 40%, de préférence 7% à 15% de levure, en poids rapporté au poids de farine.

12. Pâte levée selon la revendication 11 ***caractérisée en ce qu*'**elle comprend en tant que substance sucrante 10% à 30% de miel, de préférence 15% à 20%, et encore de préférence 18%, et 8% à 12% de levure, de préférence 9%, en poids rapporté au poids de farine.

13. Pâte levée selon la revendication 13, ***caractérisée en ce qu*'**elle comprend les ingrédients suivants :
- farine 1100 g
- oeufs 5 unités
- beurre 200 g
- lait 100 g
- arômes liquides 200 g
- sucre 200 g
- miel 200 g
- levure 100 g
- sel 21 g

14. Pâte surgelée en masse ou en pâtons prêts pour la cuisson, destinée à la préparation d'un produit de pâtisserie de type brioche, susceptible d'être obtenue par le procédé selon la revendication 10.

15. Pâte surgelée en masse ou en pâtons prêts pour la cuisson, destinée à la préparation d'un produit de pâtisserie de type brioche, susceptible d'être obtenue à partir de la pâte levée selon l'une des revendications 11 à 14.

16. Procédé de préparation d'un produit de pâtisserie de type brioche consistant à placer un pâton surgelé selon l'une des revendications 15 ou 16 à une température de 30°C à 40°C durant 2 à 4 heures, puis à réaliser la cuisson dudit pâton dans un four à la température habituelle.

17. Produit de pâtisserie de type brioche obtenu à partir d'une pâte surgelée en masse ou en pâtons susceptible d'être obtenue par le procédé selon l'une des revendications 1 à 10.

## Claims

1. Method for preparing a leavened dough of the brioche (bun) type, in particular with a view to manufacturing ready-to-bake frozen balls of dough, said method consisting in mixing together flour, fats, eggs, milk, at least one flavouring agent, at least one sweetening substance, yeast and salt, ***characterised in that*** it comprises the following steps:
- introducing into a kneader a first sweetening substance fraction with the flour, the yeast, the eggs, the milk, at least one flavouring agent and the salt,
- tempering then first kneading,
- introducing the remaining fraction of sweetening substance and second kneading,
- introducing fats and third kneading,
- fermenting.

2. Method according to claim 1, ***characterised in that*** up to 80%, preferably 26% to 60% of total sweetening substance, and 7% to 40%, preferably 7% to 15% of yeast, by weight in relation to the weight of flour, are introduced into the kneader.

3. Method according to claim 1, ***characterised in that*** said first sweetening substance fraction is introduced into the kneader at a level of between 10% and 30%, preferably between 15% and 20% and even more preferably 18%, by weight in relation to the weight of flour; and between 8% and 12% of yeast, preferably 9%, by weight in relation to the weight of flour.

4. Method according to one of claims 1 to 3, ***characterised in that*** said first sweetening substance fraction is added in the form of honey.

5. Method according to one of claims 1 to 4, ***characterised in that*** said first sweetening substance fraction, the milk and at least one flavouring agent are introduced into the kneader in the form of a previously melted mixture kept refrigerated for at least 20 hours.

6. Method according to any of the preceding claims, **characterised in that** the tempering is carried out at slow speed.

7. Method according to one of the preceding claims, ***characterised in that*** the first kneading is extended by comparison with traditional kneading, preferably up to 20 minutes.

8. Method according to one of the preceding claims, ***characterised in that*** the fermenting is carried out at a temperature of between 28°C and 35°C, for 3 to 4 hours.

9. Method according to one of the preceding claims, ***characterised in that*** after the fermenting step, the dough is knocked back and refrigerated, then divided and shaped into balls before being baked.

10. Method according to claim 9, ***characterised in that*** the dough is deep-frozen before or after being divided and shaped into balls.

11. Leavened dough of the brioche type which withstands deep-freezing, for the preparation of balls of dough, especially frozen balls of dough, comprising flour, eggs, fats, milk, at least one sweetening substance, at least one flavouring agent and salt, ***characterised in that*** said dough includes 26% to 60% of sweetening substance, and 7% to 40%, preferably 7% to 15% of yeast, by weight in relation to the weight of flour.

12. Leavened dough according to claim 11, ***characterised in that*** it includes as the sweetening substance 10% to 30% of honey, preferably 15% to 20%, and more preferably 18%, and 8% to 12% of yeast, preferably 9%, by weight in relation to the weight of flour.

13. Leavened dough according to claim 12, ***characterised in that*** it contains the following ingredients:
- flour 1100 g
- eggs 5 units
- butter 200 g
- milk 100 g
- liquid flavourings 200 g
- sugar 200 g
- honey 200 g
- yeast 100 g
- salt 21 g.

14. Dough frozen in bulk or in balls ready for baking, intended for the preparation of a bakery product of the brioche type, which may be obtained by the method according to claim 10.

15. Dough frozen in bulk or in balls ready for baking, intended for the preparation of a bakery product of the brioche type, which may be obtained from the leavened dough according to one of claims 11 to 14.

16. Method of preparing a bakery product of the brioche type consisting in placing a frozen ball of dough according to one of claims 15 or 16 at a temperature of between 30°C and 40°C for 2 to 4 hours, then baking said ball in an oven at the usual temperature.

17. Bakery product of the brioche type obtained from a dough frozen in bulk or in balls which can be obtained by the method according to one of claims 1 to 10.

## Patentansprüche

1. Verfahren zur Zubereitung eines Hefeteigs von der Art eines Briocheteigs, insbesondere zum Zweck der Herstellung von tiefgekühlten, backfertigen Teiglingen, bestehend aus dem Vermengen von Mehl, Fetten, Eiern, Milch, mindestens einem Aromastoff, mindestens einem Süßungsmittel, Hefe und Salz, **dadurch gekennzeichnet, dass** es folgende Schritte beinhaltet:
- Zugabe eines ersten Teils des Süßungsmittels in einen Kneter, mit dem Mehl, der Hefe, den Eiern, der Milch, mindestens einem Aromastoff und dem Salz,
- Vermengen, dann erstes Kneten,
- Zugabe des Restanteils des Süßungsmittels und zweites Kneten,
- Zugabe der Fette und drittes Kneten,
- Gehen.

2. Verfahren nach Anspruch 1,
**dadurch gekennzeichnet,**
**dass** in den Kneter bis zu 80% des gesamten Süßungsmittels, vorzugsweise von 26 % bis 60 %, und 7 % bis 40 % der Hefe, vorzugsweise von 7 % bis 15 %, zugegeben wird, bezogen auf das Gewicht des Mehls.

3. Verfahren nach Anspruch 1,
**dadurch gekennzeichnet,**
**dass** in den Kneter der besagte erste Teil des Süßungsmittels in Höhe von 10 % bis 30 %, vorzugsweise 15 % bis 20 % und noch mehr bevorzugt 18 % zugegeben wird, bezogen auf das Gewicht des Mehls; und 8 % bis 12 % der Hefe, vorzugsweise 9 %, bezogen auf das Gewicht des Mehls.

4. Verfahren nach einem der Ansprüche 1 bis 3,
**dadurch gekennzeichnet,**
**dass** der besagte erste Teil des Süßungsmittels in Form von Honig zugefügt wird.

5. Verfahren nach einem der Ansprüche 1 bis 4,
**dadurch gekennzeichnet,**
**dass** der besagte erste Teil des Süßungsmittels, die Milch und mindestens ein Aromastoff in den Kneter gegeben werden in Form einer zuvor geschmolzenen und mindestens 20 Stunden kaltgestellten Masse.

6. Verfahren nach irgend einem der vorhergehenden Ansprüche,
**dadurch gekennzeichnet,**
**dass** das Vermengen bei langsamer Geschwindigkeit durchgeführt wird.

7. Verfahren nach einem der vorhergehenden Ansprüche,
**dadurch gekennzeichnet,**
**dass** der erste Knetvorgang verlängert wird im Vergleich zu einem herkömmlichen Knetvorgang, vorzugsweise bis zu 20 Minuten.

8. Verfahren nach einem der vorhergehenden Ansprüche,
**dadurch gekennzeichnet,**
**dass** das Gehen des Teigs bei einer Temperatur von 28°C bis 35°C bei einer Dauer von 3 bis 4 Stunden erfolgt.

9. Verfahren nach einem der vorhergehenden Ansprüche,
**dadurch gekennzeichnet,**
**dass** nach dem Schritt des Gehens der Teig geschlagen und kaltgestellt wird, anschließend vor dem Backen geteilt und zu Teiglingen geformt wird.

10. Verfahren nach Anspruch 9,
**dadurch gekennzeichnet,**
**dass** der Teig vor oder nach dem Teilen und dem Formen zu Teiglingen tiefgefroren wird.

11. Hefeteig von der Art eines Briocheteigs, welcher tiefkühlverträglich ist, für die Herstellung von Teiglingen, insbesondere von tiefgekühlten Teiglingen, bestehend aus Mehl, Eiern, Fetten, Milch, mindestens einem Süßungsmittel, mindestens einem Aromastoff und Salz,
**dadurch gekennzeichnet,**
**dass** der besagte Teig 26 % bis 60 % Süßungsmittel und 7 % bis 40 %, vorzugsweise 7 % bis 15 % Hefe enthält, bezogen auf das Gewicht des Mehls.

12. Hefeteig gemäß Anspruch 11,
**dadurch gekennzeichnet,**
**dass** er als Süßungsmittel 10 % bis 30 % Honig enthält, vorzugsweise 15 % bis 20 %, weiter bevorzugt 18 %, und 8 % bis 12 % Hefe, bevorzugt 9 %, bezogen auf das Gewicht des Mehls.

13. Hefeteig gemäß Anspruch 12,
**dadurch gekennzeichnet,**
**dass** er folgende Zutaten enthält:
- Mehl 1100 g
- Eier 5 Volleier
- Butter 200 g
- Milch 100 g
- flüssige Aromen 200 g
- Zucker 200 g
- Honig 200 g
- Hefe 100 g
- Salz 21 g

14. Tiefgefrorene, backfertige Teigmasse oder backfertige Teiglinge für die Herstellung eines Backwaren-Produkts von der Art eines Brioche, die durch das Verfahren nach Anspruch 10 erhältlich ist oder sind.

15. Tiefgefrorene, backfertige Teigmasse oder backfertige Teiglinge für die Herstellung eines Backwaren-Produkts von der Art eines Brioche, die aus dem Hefeteig nach einem der Ansprüche 11 bis 14 erhältlich ist oder sind.

16. Verfahren zur Herstellung eines Backwaren-Produkts von der Art eines Brioche, welches beinhaltet, einen tiefgefrorenen Teigling nach einem der Ansprüche 15 oder 16 einer Temperatur von 30°C bis 40°C bei einer Dauer von 2 bis 4 Stunden auszusetzen und dann anschließend das Backen des besagten Teiglings in einem Ofen bei der gewohnten Temperatur durchzuführen.

17. Backwaren-Produkt von der Art eines Brioche, erhalten durch eine tiefgefrorene Teigmasse oder einen Teigling, die oder der durch das Verfahren nach einem der Ansprüche 1 bis 10 erhältlich ist.
